# FASCICULE DE BREVET EUROPEEN

(11) **EP 2 929 232 B1**
(45) Date de publication et mention de la délivrance du brevet: **23.11.2016**
(21) Numéro de dépôt: 13808145.0
(22) Date de dépôt: 03.12.2013
(51) Int. Cl.: F21Y 115/10, F21Y 113/10

(54) **DISPOSITIF D'ECLAIRAGE A LEDS POUR CHAMPS OPERATOIRE COMPRENANT UN DIVISEUR DE FAISCEAUX DE LUMIERE**
LED-BELEUCHTUNGSVORRICHTUNG FÜR EIN OPERATIONSFELD MIT LICHTSTRAHLTEILER
LED LIGHTING DEVICE FOR AN OPERATING FIELD COMPRISING A LIGHT BEAM DIVIDER

(30) Priorité: 07.12.2012 FR 1261765
(43) Date de publication de la demande: 14.10.2015
(73) Titulaire: Maquet SAS, 45160 Ardon (FR)
(72) Inventeur: VALTEAU, Cécilia, F-45240 Ligny Le Ribault (FR); VU THUI, Minh-Hong, 45160 ARDON (FR)
(74) Mandataire: Prugneau, Philippe
(86) Numéro de dépôt international: PCT/FR2013/052918
(87) Numéro de publication internationale: WO 2014/087088

(56) Documents cités:
- US-A1- 2006 007 538
- US-A1- 2007 138 966
- US-A1- 2008 174 868
- US-A1- 2011 069 485

## Description

### Domaine technique

L'invention concerne un dispositif d'éclairage à LEDs notamment pour un appareil d'éclairage médical d'un champ opératoire.

### Technique antérieure

En milieu médical, notamment en bloc opératoire, les conditions d'éclairage doivent être adaptées pour que l'utilisateur, par exemple un chirurgien ou un médecin, puisse travailler correctement. En particulier, l'éclairage doit être le plus homogène possible pour que l'utilisateur puisse distinguer les différents types de tissus biologiques dans le champ d'éclairage.

En outre, l'éclairage, de lumière globalement blanche, doit se conformer à certaines normes et produire une lumière présentant un indice de rendu des couleurs (IRC) compris entre 85 et 100 ainsi qu'une température de couleurs comprise entre 3000 degrés Kelvin (K) et 6700 K. On comprend ici par « température de couler » de la lumière, la température de couleur équivalente évaluée de manière classique à partir des coordonnées chromatiques (x,y) de cette lumière dans un diagramme chromatique de la Commission Internationale de l'Eclairage.

Par ailleurs, il est souvent souhaitable que l'utilisateur puisse faire varier certaines caractéristiques spectrales de la lumière, dont la température de couleur, pour l'adapter à son besoin. Idéalement, une telle variation des caractéristiques spectrales ne doit pas être accompagnée de variation de l'éclairement visuel. On notera que l'on définit ici le flux lumineux d'une source de lumière comme la puissance lumineuse émise exprimée en lumens (lm), et l'éclairement visuel d'un dispositif d'éclairage dans un champ d'éclairage comme la quantité de flux lumineux éclairant ce champ d'éclairage par unité de surface exprimée en lux, c'est-à-dire en lumen par mètre carré (lm/m²).

Actuellement, il existe différents types de dispositifs d'éclairage répondant en partie à ces exigences qui mélangent la lumière issue de plusieurs sources de lumières pour obtenir une lumière d'éclairage blanche.

On connaît du document de brevet EP2299163 un dispositif d'éclairage tel que décrit plus haut, dans lequel des diodes électroluminescentes, ou LEDs pour Light Emitting Diode, blanches ayant deux températures de couleurs distinctes, l'une blanche chaude et l'autre blanche froide, sont réparties en alternance sur la périphérie d'un réflecteur central qui focalise la lumière émise par les LEDs dans le champ d'éclairage. La température de couleur résultante de ce dispositif d'éclairage peut être modifiée selon plusieurs températures de couleur prédéfinies. L'utilisateur a donc accès à une plage de température de couleur limitée. Toutefois, les faisceaux provenant des deux types de LEDs sont distincts et de ce fait, le volume de lumière résultant n'est pas homogène. Par ailleurs, ce dispositif d'éclairage présente l'inconvénient que, quand un utilisateur regarde le dispositif d'éclairage, il voit des alternances de lumière blanche chaude et de lumière blanche froide correspondant aux deux types de LED utilisées, ce qui n'est pas très confortable visuellement.

On connaît aussi du document de brevet US 7465065 un dispositif d'éclairage à LEDs blanches et colorées juxtaposées qui permettent globalement d'obtenir une lumière blanche. Toutefois, un tel dispositif produit une lumière non homogène et, avec ce type de dispositif d'éclairage, lorsqu'un obstacle masque une partie du flux lumineux, il rompt l'équilibre entre les contributions des différentes LEDs ce qui modifie la température de couleur de la lumière produite par le dispositif d'éclairage et produit un effet d'irisation, conduisant à la formation d'ombres colorées dans le champ opératoire, par exemple lorsque l'utilisateur se penche sous l'éclairage.

On connaît aussi du document de brevet DE 10 2006 040 393 un dispositif d'éclairage à LEDs dans lequel des LEDs blanches et colorées formant une « multichip » de LEDs sont couplées ensemble à une optique de focalisation unique, ce qui permet d'obtenir une lumière d'éclairage blanche de température de couleur ajustable. Un guide de lumière est interposé entre la multichip de LEDs et l'optique de focalisation pour améliorer le mélange des couleurs. Cependant, un tel guide de lumière présente l'inconvénient de réduire le rendement optique du dispositif d'éclairage en raison de la difficulté technique d'injecter un flux lumineux émis par une source de lumière dans le guide de lumière. Ainsi, la puissance consommée d'un tel dispositif d'éclairage est élevée. De plus, il est difficile avec ce type de dispositif d'éclairage d'obtenir un éclairement homogène, et l'éclairement du champ opératoire varie en fonction de la température de couleur choisie par l'utilisateur. En outre, ce type de dispositif d'éclairage présente d'autres inconvénients, par exemple la production d'ombres colorées dans le champ d'éclairage lorsqu'un obstacle masque une partie du flux lumineux.

On connaît aussi du document US20110069485 un dispositif d'éclairage d'un champ opératoire combinant deux lumières blanches. On connaît aussi du document US20060007538 un système d'éclairage, dans lequel des faisceaux de lumières produites par des LEDs de couleurs différentes, sont combinés par un diviseur de faisceau polarisé. Ainsi chaque faisceau est divisé en un faisceau transmis et un faisceau réfléchi avec des polarisations orthogonales. Ainsi il est permis de fabriquer une lumière blanche polarisée à partir de sources non polarisées, ayant par exemple une application pour la projection LCD.

On connaît aussi de US20110292343 un système d'éclairage ophtalmologique en, lumière blanche augmentée spectralement avec de la couleur par le biais de un ou plusieurs diviseurs de faisceaux en cascade.

### Exposé de l'invention

Le but de l'invention est de remédier à tous ces inconvénients en proposant un dispositif d'éclairage offrant un éclairement homogène et un rendement optique élevé, sans créer d'ombres colorées dans le champ d'éclairage et autorisant une variation de la température de couleur de l'éclairage.

A cet effet, l'invention a pour objet un dispositif d'éclairage à LEDs comprenant une première LED agencée pour émettre un premier faisceau de lumière blanche ayant une première température de couleur et une seconde LED agencée pour émettre un second faisceau de lumière ayant une seconde température de couleur différente de ladite première température de couleur, caractérisé en ce qu'il comprend en outre un diviseur de faisceau pour diviser ledit premier faisceau de lumière en une première partie de premier faisceau qui est réfléchie par le diviseur et en une seconde partie de premier faisceau qui est transmise par le diviseur et pour diviser ledit second faisceau de lumière en une première partie de second faisceau qui est réfléchie par le diviseur et une seconde partie de second faisceau qui est transmise par le diviseur, en ce que ladite première LED, ladite seconde LED et ledit diviseur de faisceau sont agencés spatialement les uns par rapport aux autres de telle sorte que ladite seconde partie du premier faisceau qui est transmise et ladite première partie du second faisceau qui est réfléchie se superposent pour former un premier faisceau résultant ayant une température de couleur intermédiaire comprise entre la première température de couleur et la seconde température de couleur, et que ladite première partie du premier faisceau qui est réfléchie et ladite seconde partie du second faisceau qui est transmise se superposent pour former un second faisceau résultant ayant ladite température de couleur intermédiaire, et en ce qu'il comprend en outre un premier élément optique agencé pour focaliser ledit premier faisceau résultant vers une zone du champ d'éclairage et un second élément optique agencé pour focaliser ledit second faisceau résultant vers ladite zone.

Avec un tel agencement, le dispositif d'éclairage à LEDs peut donc générer deux faisceaux de lumière résultants sensiblement identiques et contenant chacun une partie du faisceau émis par la première LED et une partie du faisceau émis par la seconde LED, ces deux parties de faisceau étant superposées et les deux faisceaux résultants identiques pouvant être focalisés vers un même point image dans le champ opératoire. La lumière issue des LEDs, en particulier une lumière blanche, est donc mélangée avec une efficacité théorique de 100%, en considérant un diviseur de faisceau ayant un pouvoir de transmission de 50% et un pouvoir de réflexion de 50%. On obtient donc une lumière blanche résultante ayant un éclairement homogène et un rendement optique élevé.

En outre, en cas de présence d'obstacle dans le champ d'éclairage, il ne se forme pas d'ombre colorée dans le champ d'éclairage.

Le dispositif d'éclairage selon l'invention peut présenter avantageusement les particularités suivantes :
- le dispositif d'éclairage comprend en outre un moyen d'alimentation en courant électrique adapté pour alimenter lesdites première et seconde LEDs avec des intensités de courant respectives variables, et une unité de commande agencée pour commander ledit moyen d'alimentation de telle sorte que la somme des flux lumineux des première et seconde LEDs reste constante lorsque lesdites intensités de courants respectives varient, ce qui permet, en modulant de manière appropriée l'intensité de courant dans chacune des LEDs, d'obtenir la température de couleur du flux lumineux résultant souhaitée par l'utilisateur. On peut obtenir ainsi un éclairement constant et un rendement optique élevé sur toute une gamme de températures de couleur ;
- le premier faisceau de lumière émis par la première LED est sensiblement perpendiculaire au second faisceau de lumière émis par la seconde LED ;
- les première et seconde LEDs sont disposées à des distances respectives dudit diviseur de faisceau sensiblement égales ;
- le diviseur de faisceau peut être par exemple un miroir semi-réfléchissant ou dichroïque à une ou deux faces séparatrices pour séparer un rayon incident en deux flux lumineux, l'un réfléchi, l'autre réfracté ;
- le miroir semi-réfléchissant peut être incliné d'un angle sensiblement égal à 45° par rapport aux premier et second faisceaux de lumière blanche pour une division de rayon incident à 50% ;
- les première et seconde LEDs sont sensiblement identiques d'un point de vue géométrique, ce qui favorise l'obtention d'un éclairement homogène. En pratique, les LEDs auront ainsi un même boîtier, une même puce électronique, mais la composition des phosphores formant la diode sera différente d'une LED à l'autre ;
- le premier élément optique peut être un réflecteur elliptique et le second élément optique peut être une lentille ;
- le réflecteur elliptique est agencé de telle sorte que la première LED est positionnée au foyer objet du réflecteur elliptique et la zone du champ d'éclairage est positionnée au foyer image du réflecteur elliptique. Grâce à cet agencement du dispositif selon l'invention, le premier faisceau transmis issu de la première LED est focalisé au foyer image, ainsi que le second faisceau réfléchi issu de la seconde LED. En effet, étant donné la position du diviseur de faisceau entre les deux LEDs, le second faisceau réfléchi semble être issu de la première LED, donc issu du foyer objet et est par conséquent focalisé au foyer image du réflecteur elliptique;
- le dispositif d'éclairage peut comprendre en outre un troisième élément optique positionné entre chaque LED et le diviseur de faisceau ce qui permet de diminuer la divergence du faisceau résultant. Avantageusement, en diminuant la divergence du faisceau résultant, on diminue aussi la surface d'éclairage sur le premier élément optique, ce qui permet de réduire l'épaisseur du dispositif d'éclairage ;
- le troisième élément optique peut être une lentille agencée de telle sorte que l'image virtuelle de la LED est positionnée au foyer objet du réflecteur elliptique ;
- chaque LED a une température de couleur comprise entre 3000 degrés Kelvin et 5000 degrés Kelvin.

L'invention s'étend à un appareil d'éclairage médical, notamment d'un champ d'éclairage opératoire, comprenant un tel dispositif d'éclairage.

Avantageusement, l'appareil d'éclairage peut en outre être de type à coupole d'éclairage dans laquelle est inclus un ou plusieurs de tels dispositif d'éclairage, la coupole d'éclairage étant partiellement ouverte, ce qui apporte l'avantage de pouvoir laisser circuler dé l'air dans la coupole, notamment autour des LEDs, des éléments optiques et du diviseur de faisceau.

On peut aussi avec une telle géométrie de coupole, utiliser d'un côté du séparateur de faisceaux une LED blanche et de l'autre côté une LED rouge pour améliorer le rendu de couleurs dans le rouge ce qui est important pour bien distinguer les nuances de rouge des tissus et du sang. La lumière résultante est alors une addition de la lumière blanche et de la lumière rouge. La température de couleur de la lumière résultante peut aussi être réglée comme indiqué plus haut.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés dans lesquels :
- la figure 1 est une vue schématique en perspective d'un appareil d'éclairage d'un champ opératoire incorporant le dispositif d'éclairage selon l'invention ;
- la figure 2 est une vue très schématique de principe du dispositif d'éclairage selon l'invention ;
- la figure 3 est une vue schématique de principe plus détaillée du dispositif d'éclairage selon l'invention ;
- la figure 4 est un graphique qui montre la relation entre intensité de courant et température de couleur dans un dispositif selon l'invention.
- la figure 5 représente très schématiquement un appareil d'éclairage d'un champ opératoire de type à coupole incorporant plusieurs dispositifs d'éclairage selon l'invention.
- la figure 6 est une vue schématique d'un exemple de support pour les LEDs.

### Description d'un exemple de réalisation

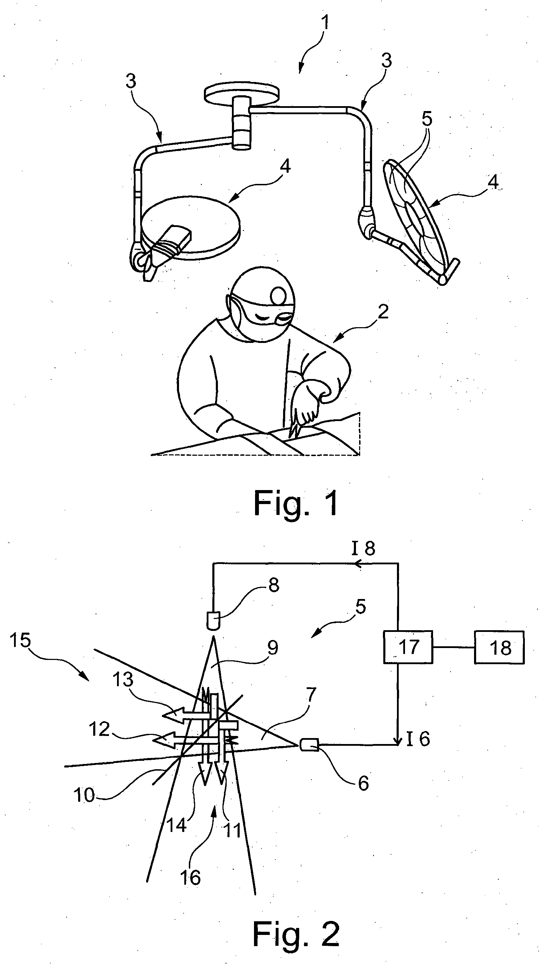

Sur la figure 1, on a illustré un système d'éclairage 1 pour éclairer un champ d'éclairage opératoire 2, ici un champ d'intervention d'un chirurgien sur un patient. Le système d'éclairage 1 est ici du type suspendu au plafond de la salle opératoire de façon connue en soi, et comprend dans le cas d'exemple deux bras de suspension 3 articulés portant chacun une coupole 4 d'éclairage incorporant chacune plusieurs dispositifs d'éclairage 5 selon l'invention.

On a représenté sur la figure 2 une illustration de principe d'un dispositif d'éclairage 5 selon l'invention qui comprenant ici une première diode électroluminescente ou LED 6 agencée pour émettre un premier faisceau de lumière blanche 7 ayant une première température de couleur Tk1 et une seconde diode électroluminescente ou LED 8 agencée pour émettre un second faisceau de lumière blanche 9 ayant une seconde température de couleur Tk2 différente de ladite première température de couleur.

Le dispositif d'éclairage 5 comprend en outre un diviseur de faisceau 10 agencé pour diviser le premier faisceau de lumière blanche 7 en une première partie de premier faisceau 11 qui est réfléchie par le diviseur de faisceau 10 et en une seconde partie de premier faisceau 12 qui est transmise ou réfractée par le diviseur de faisceau 10 et pour diviser le second faisceau de lumière blanche 9 en une première partie de second faisceau 13 qui est réfléchie par le diviseur de faisceau 10 et une seconde partie de second faisceau 14 qui est transmise ou réfractée par le diviseur de faisceau 10.

Avantageusement, comme on peut le voir sur la figure 2, la première LED 6, la seconde LED 8 et le diviseur de faisceau 10 sont agencés spatialement les uns par rapport aux autres de telle sorte que la seconde partie de premier faisceau 12 qui est transmise par le diviseur de faisceau 10 et la première partie de second faisceau 13 qui est réfléchie par le diviseur de faisceau 10 se superposent pour former un premier faisceau résultant de lumière blanche 15 ayant une température de couleur intermédiaire Tkr comprise entre la première température de couleur Tk1 et la seconde température de couleur Tk2, et que la première partie de premier faisceau 11 qui est réfléchie par le diviseur de faisceau 10 et la seconde partie de second faisceau 14 qui est transmise par le diviseur de faisceau 10 se superposent pour former un second faisceau résultant de lumière blanche 16 identique au faisceau 15 et ayant la même température de couleur intermédiaire Tkr.

Selon l'invention, comme on le comprend à partir de la figure 2, le dispositif d'éclairage 5 permet donc de générer deux faisceaux de lumière résultants 15, 16 sensiblement identiques qui contiennent chacun du flux lumineux issu de la première LED 6 et du flux lumineux issu de la seconde LED 8. Avantageusement, grâce à l'agencement relatif des LEDs 6, 8 et du diviseur de faisceau 10, on obtient une superposition des faisceaux de lumière issus des LED 6, 8 proche d'une addition.

On obtient ainsi un dispositif d'éclairage 5 produisant une lumière blanche très homogène, ayant une température de couleur intermédiaire et un flux lumineux total égal à la somme des flux lumineux respectifs des première et seconde LEDs 6, 8. La lumière issue des première et seconde LEDs 6, 8 est parfaitement mélangée sans utilisation d'un guide de lumière ou autre dispositif optique limitant le rendement optique.

Le diviseur de faisceau 10 doit permettre de diviser sur deux faces opposées un faisceau avec un rendement théorique de 100%, c'est-à-dire sans perte, dont par exemple 50% en réflexion et 50% en transmission ou encore par exemple 30% en réflexion et 70% en transmission. On peut utiliser par exemple comme diviseur de faisceau 10 un miroir dichroïque ou semi-réfléchissant à haute efficacité qui est neutre sur le plan spectral et qui comprend une lame support (en verre ou en matière synthétique) recouverte d'une couche mince d'un composé métallique ou diélectrique apte à diviser sur deux faces opposées un faisceau lumineux incident en un flux réfléchi et un flux réfracté, la division se faisant sur un spectre d'intensités lumineuses ou encore sur un spectre de longueurs d'onde du flux incident.

Selon l'invention, comme illustré sur la figure 2, le dispositif d'éclairage 5 peut comprendre en outre un moyen d'alimentation en courant électrique 17 adapté pour alimenter de façon séparée les première et seconde LEDs 6, 8 avec des courants I6, I8 d'intensités respectives variables et une unité de commande 18 agencée pour commander le moyen d'alimentation 17 de telle sorte que le flux lumineux total reste constant lorsque les intensités respectives varient dans les première et seconde LEDs 6, 8. La température de couleur intermédiaire Tkr des premier, second faisceaux résultants 15, 16 peut donc varier en fonction des courants d'alimentation traversant chaque première, seconde LED 6, 8, comme cela sera décrit plus en détail plus bas.

Le moyen d'alimentation électrique 17 peut se présenter sous la forme d'une alimentation électrique unique ou alors sous la forme de deux alimentations électriques distinctes.

En amont du diviseur de faisceau 10, chaque LED 6, 8 pourra être reliée à un radiateur de refroidissement, par exemple avec de la graisse thermique.

Dans le cas d'exemple représenté sur la figure 2, la seconde LED 8 est tournée de 90° par rapport à la première LED 6, c'est-à-dire que le premier faisceau de lumière blanche 7 émis par la première LED 6 est sensiblement perpendiculaire au second faisceau de lumière blanche 9 émis par la seconde LED 8. Les première et seconde LEDs 6, 8 sont disposées à égales distances du diviseur de faisceau 10 pour obtenir deux faisceaux résultant 16,15 identiques en terme de géométrie, de flux lumineux et d'homogénéité chromatique. Sur la figure 2, on a représenté la lame d'un miroir semi-réfléchissant qui est inclinée d'un angle sensiblement égal à 45° par rapport aux axes des premier et second faisceaux de lumière blanche 7, 9 afin d'obtenir une meilleur efficacité de division des faisceaux lumineux.

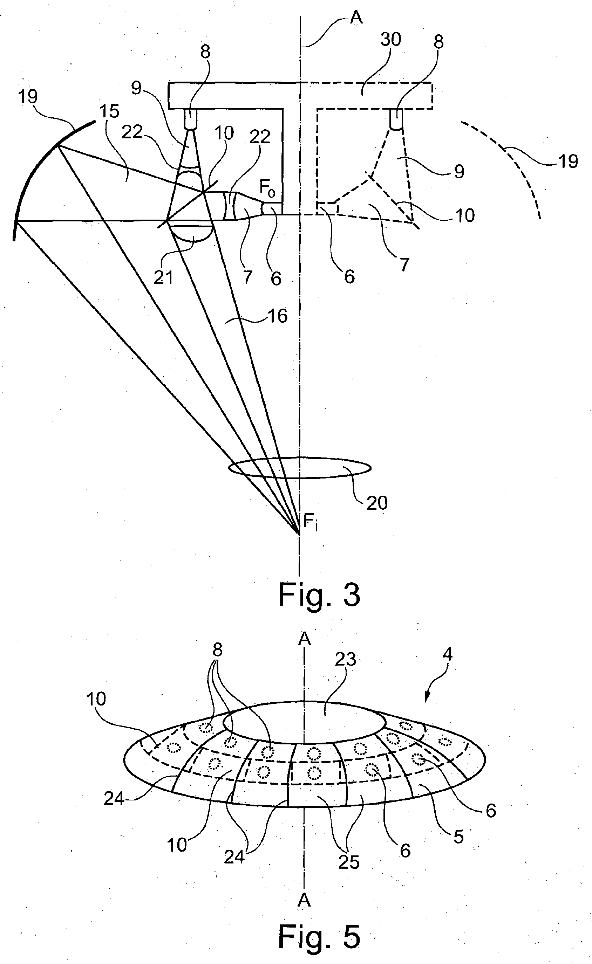

Comme on peut le voir maintenant sur la figure 3, le dispositif d'éclairage 5 peut comprendre en outre un élément optique 19 agencé pour focaliser le premier faisceau résultant 15 vers une certaine zone 20 du champ d'éclairage 2, ainsi qu'un second élément optique 21 agencé pour focaliser le second faisceau résultant 16 vers la même zone 20. Cette zone 20 est globalement un volume d'éclairage cylindrique dont le diamètre peut être d'environ 10 à 30 cm et la hauteur de 30 à 60 cm.

Avec cet agencement du dispositif d'éclairage 5, d'une part, le premier faisceau de lumière blanche 7 issu de la première LED 6 est pour moitié transmis vers le premier élément optique 19 (seconde partie de premier faisceau 12) et pour moitié réfléchi vers le second élément optique 21 (première partie de premier faisceau 11) ; et d'autre part, le second faisceau de lumière blanche 9 issu de la seconde LED 8 est pour moitié réfléchi vers le premier élément optique 19 (première partie de second faisceau 13) et pour moitié transmis vers le second élément optique 21 (seconde partie de second faisceau 14).

De manière avantageuse, comme représenté sur la figure 3, le premier élément optique 19 est un réflecteur elliptique agencé de telle sorte que la première LED 6 est positionnée au foyer objet Fo du réflecteur elliptique 19 et la zone 20 est positionnée au foyer image Fi du réflecteur elliptique 19. Avantageusement, grâce à l'agencement des première, seconde LEDs 6, 8, du diviseur de faisceau 10 et du réflecteur elliptique 19, tous les rayons du premier faisceau résultant 15 se retrouvent focalisés au foyer image Fi, dans la zone 20, c'est-à-dire la seconde partie de premier faisceau 12 issue de la première LED 6 et la première partie de second faisceau 13 issu de la seconde LED 8. En effet, la première partie de second faisceau 13 issu de la seconde LED 8 est réfléchie par le diviseur de faisceau 10 et semble provenir de la première LED 6, donc du foyer objet Fo, et par conséquent est focalisée aussi dans le foyer image Fi dans la zone 20.

Comme on peut le voir encore sur la figure 3, le second élément optique 21 est ici une lentille qui est placée dans le second faisceau résultant 16 à distance du diviseur de faisceaux 10 de sorte à focaliser les rayons du second faisceau résultant 16 vers la zone 20. Étant donnée la disposition géométrique des première, seconde LED 6, 8, du diviseur de faisceau 10 et du second élément optique 21, la seconde partie de second faisceau 14 issue de la seconde LED 8 se retrouve focalisée au foyer image Fi dans la zone 20, ainsi que la première partie de premier faisceau 11 issue de la première LED 6 réfléchie par le diviseur de faisceau 10 qui semble provenir de la seconde LED 8. On comprendra que le second faisceau résultant 16 peut aussi être dévié, par exemple en mettant un tilt sur la face de sortie de la lentille 21 ou encore en désaxant la lentille 21 par rapport à la LED. On a donc ici les deux faisceaux 15 et 16 qui convergent au point Fi dans la zone 20 du champ opératoire.

Sur la figure 3, on a représenté un troisième élément optique 22 positionné entre la LED 6 et le diviseur de faisceau 10 et aussi entre la LED 8 et le diviseur de faisceau 10 qui a pour fonction de diminuer la divergence des faisceaux de lumière blanche 7 et 9. Ainsi, cet élément optique 22 permet de diminuer globalement la divergence des faisceaux résultants 15 et 16, donc la surface d'éclairage sur le premier élément optique 19, ce qui permet de réduire l'épaisseur de la coupole 4. Cet élément optique 22 peut être une lentille qui sera agencée de telle sorte que l'image virtuelle de la première LED 6 par exemple créée par cette lentille soit positionnée au foyer objet Fo du premier élément optique 19. De cette manière, le faisceau de lumière sortant de cette lentille semble provenir du foyer objet Fo du premier élément optique 19 et est par conséquent focalisé vers le foyer image Fi du réflecteur elliptique 19 dans la zone 20. Il en est de même pour la LED 8 avec la lentille 22.

Pour obtenir un éclairage adapté au milieu médical, on choisira des LEDs blanches ayant un indice de rendu des couleurs élevé, compris entre 85 et 100, de préférence compris entre 90 et 100, voire compris entre 95 et 100 et une température de couleur comprise entre 3000K et 5000K. Dans le cas d'exemple, on peut utiliser une LED 6 ayant une température de couleur Tk1 de 3000K et une LED 8 ayant une température de couleur Tk2 de 5000K. On obtient alors un éclairage en lumière blanche avec une température de couleur intermédiaire Tkr d'environ 4000K lorsque les première et seconde LED 6, 8 sont traversées par des courants respectivement I6,I8 d'intensité sensiblement identique, comme cela sera décrit plus en détail ci-après.

De préférence, on choisira des première et seconde LEDs 6, 8 géométriquement identiques hormis leur température de couleur, afin de s'affranchir de toute différence de flux lumineux entre les première, seconde LEDs 6, 8 et d'obtenir un éclairage homogène. La différence entre les première et seconde LEDs pourra se situer par exemple au niveau de la composition des mélanges de poudre de phosphore qui forment les LEDs. En particulier, on choisira de préférence des LEDs provenant du même fournisseur, ayant par exemple un même boîtier, des mêmes puces électroniques et nécessitant un même type d'alimentation.

On comprend donc qu'avec un dispositif d'éclairage 5 selon l'invention qui ne comprend que des LEDs blanches, la présence d'un obstacle dans le flux lumineux du dispositif d'éclairage 5 ne crée pas d'ombre colorée dans le champ opératoire 2.

Par ailleurs, il est connu que le flux lumineux d'une LED dépend de l'intensité du courant qui la traverse. Selon l'invention, l'unité de commande 18 est agencée pour faire varier l'intensité des courants électriques I6,I8 traversant respectivement les première et seconde LEDs 6, 8 selon un principe de vases communicants afin de maintenir constant le flux lumineux total, de sorte que l'éclairement dans le champ opératoire 2 reste constant lors du changement de la température de couleur intermédiaire. On entend ici par « constant » que le flux lumineux est identique à 5% près.

Ainsi, le dispositif d'éclairage, 5 selon l'invention produit une lumière blanche ayant une température de couleur intermédiaire Tkr qui est modulable entre la première température de couleur Tk1 de la LED 6 et la seconde température de couleur Tk2 de la LED 8, à éclairement constant grâce à une simple variation appropriée de l'intensité des courants respectifs alimentant les première, seconde LEDs 6, 8.

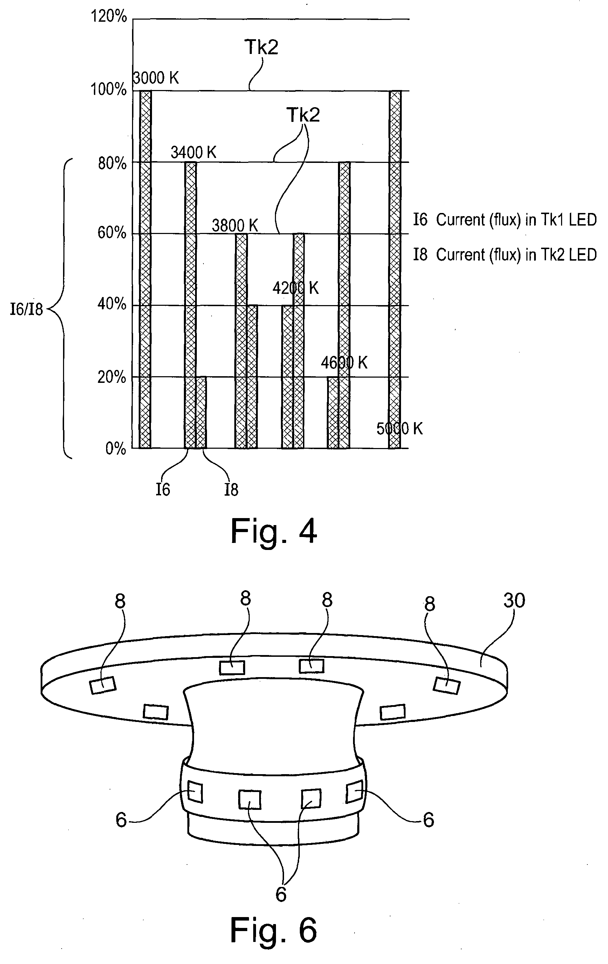

La figure 4 est un graphique qui illustre différentes températures Tkr de la lumière d'éclairage du dispositif d'éclairage 5 obtenues à partir de différentes intensités de courant I6,I8 alimentant les première et seconde LEDs 6, 8 qui permettent de conserver un flux lumineux total constant. On voit sur ce graphique que les intensités de courant appropriées des première et seconde LEDs 6, 8 varient selon un principe des vases communicants, c'est-à-dire de façon sensiblement complémentaire et opposée, en tenant compte de petites corrections. En particulier, si les courants d'alimentation des première, seconde LEDs 6, 8 sont tels que les flux lumineux respectifs des première, seconde LEDs 6, 8 sont égaux, alors la température de couleur intermédiaire Tkr est la demie somme des première, seconde températures de couleur Tk1, Tk2. Si le courant dans la seconde LED 8 est nul, alors la température de couleur intermédiaire est égale à la première température de couleur de la première LED 6. A l'inverse, si le courant dans la première LED 6 est nul, alors la température de couleur intermédiaire est égale à la seconde température de couleur de la seconde LED 8. Plus le courant traversant la seconde LED 8 sera élevé par rapport à celui traversant la première LED 6, plus la température de couleur intermédiaire tendra vers la seconde température de couleur de la seconde LED 8, et inversement.

Le graphique de la figure 4 a été obtenu en mesurant un spectre de la lumière produite par le dispositif d'éclairage 5 avec un capteur adapté, par exemple un spectromètre, et en évaluant, à partir de ce spectre, de manière classique, la température de couleur de la lumière produite par le dispositif d'éclairage 5. On construit ainsi un calibrage du dispositif d'éclairage 5 qui indique les intensités de courant d'alimentation des LEDs 6, 8 à fournir pour obtenir une certaine température de couleur intermédiaire du dispositif d'éclairage 5.

Un tel capteur comme un spectromètre peut donc être incorporé dans un dispositif d'éclairage 5 selon l'invention pour mesurer la température de couleur intermédiaire Tkr en temps réel de sorte à ajuster les valeurs d'intensité I6, I8 respectivement des première et seconde LEDs 6, 8.

On voit bien sur la figure 4 qu'avec des première et seconde LEDs 6, 8 ayant des températures de couleur respectives de 3000K et 5000K, on peut faire varier la température de couleur intermédiaire du dispositif d'éclairage 5, ici par palier, entre environ 3000K et 5000K.

La figure 5 illustre de façon très schématique un appareil d'éclairage du type coupole incorporant plusieurs dispositifs d'éclairage 5. La coupole 4 a ici une forme générale de demi-sphère aplatie et évidée à son pôle 23. Elle présente des côtes 24 intérieures sur des arcs de méridien régulièrement espacés autour de l'axe de révolution A-A de la coupole, chaque côte 24 séparant deux dispositifs d'éclairage 5 adjacents. Le réflecteur elliptique 19 d'un dispositif d'éclairage 5 est globalement constitué sur la figure 5 par un arc d'un fuseau ellipsoïde 25 défini entre deux côtes adjacentes 24 à l'intérieur de la coupole. On a aussi représenté sur cette figure 5, les diviseurs de faisceaux optiques 10 à lame plane ou à symétrie de révolution et également les LEDs 6 et 8 qui sont répartis autour de l'axe A-A.

Avantageusement, l'ensemble des miroirs 10 adjacents deux à deux et répartis autour de l'axe A-A peuvent être conçus comme une pièce annulaire à facettes. De même, les réflecteurs elliptiques 19 peuvent aussi être conçus comme une pièce unique de forme annulaire. L'alimentation 17 et l'unité de commande 18 peuvent avantageusement être placées au pôle 23 de la coupole sans interférence avec le système optique en lui-même.

Dans l'appareil d'éclairage 4, il y autant de LEDs 6 que de LEDs 8. Les LEDs 6 et les LEDs 8 sont respectivement disposées sur deux anneaux concentriques définis par les bords périphériques extérieurs d'un support 30 ici à section en T montré en perspective sur la figure 6 et en coupe axiale sur la figure 3. Ce support 30 se présente à la partie supérieure du T sous la forme d'un disque portant les LEDs 8 éclairant vers le bas du T. Le support se présente en outre à la partie inférieure du T sous la forme d'un cylindre concentrique au disque et de plus faible diamètre et portant les LEDs 6 qui éclairent latéralement par rapport au T. Comme visible sur la figure 3, le support en T 30 s'étend axialement selon l'axe A de la zone 20 d'éclairage du champ opératoire. Le support 30 peut avoir aussi une fonction de radiateur pour les LEDs 6 et 8.

Il va de soi que la présente invention ne saurait être limitée à la description qui précède d'un de ses modes de réalisation, susceptibles de subir quelques modifications sans pour autant sortir du cadre de l'invention. En particulier, selon la puissance des LEDs disponibles sur le marché et la puissance d'éclairement souhaitée, on pourra choisir de monter une ou plusieurs LEDs 6 respectivement plusieurs LEDs 8 dans chaque dispositif d'éclairage 5. Mais l'utilisation d'une seule LED telle 6 ou 8 très puissante permet de réduire la surface de cartes électroniques du dispositif d'éclairage, ce qui apporte un avantage économique et écologique. On peut aussi utiliser une LED 6 blanche et une LED 8 rouge pour améliorer le rendu de couleurs R9.

## Revendications

1. Dispositif d'éclairage (5) d'un champ opératoire à LED comprenant une première LED (6) agencée pour émettre un premier faisceau de lumière blanche (7) ayant une première température de couleur et une seconde LED (8) agencée pour émettre un second faisceau de lumière blanche (9) ayant une seconde température de couleur différente de ladite première température de couleur, **caractérisé en ce qu'**il comprend en outre un diviseur de faisceau (10) pour diviser ledit premier faisceau de lumière (7) en une première partie de premier faisceau (11) qui est réfléchie par le diviseur de faisceau (10) et en une seconde partie de premier faisceau (12) qui est transmise par le diviseur de faisceau (10) et pour diviser ledit second faisceau de lumière (9) en une première partie de second faisceau (13) qui est réfléchie par le diviseur de faisceau (10) et une seconde partie de second faisceau (14) qui est transmise par le diviseur de faisceau (10), **en ce que** ladite première LED (6), ladite seconde LED (8) et ledit diviseur de faisceau (10) sont agencés spatialement les uns par rapport aux autres de telle sorte que ladite seconde partie du premier faisceau (12) qui est transmise et ladite première partie du second faisceau (13) qui est réfléchie se superposent pour former un premier faisceau résultant (15) ayant une température de couleur intermédiaire comprise entre la première température de couleur et la seconde température de couleur, et que ladite première partie du premier faisceau (11) qui est réfléchie et ladite seconde partie du second faisceau (14) qui est transmise se superposent pour former un second faisceau résultant (16) ayant ladite température de couleur intermédiaire, et **en ce qu'**il comprend en outre un premier élément optique (19) agencé pour focaliser ledit premier faisceau résultant (15) vers une zone (20) du champ d'éclairage et un second élément optique (21) agencé pour focaliser ledit second faisceau résultant (16) vers ladite zone (20).

2. Dispositif d'éclairage selon la revendication 1, comprenant en outre un moyen d'alimentation (17) en courant électrique adapté pour alimenter lesdites première et seconde LEDs (6, 8) avec des intensités de courant respectives variables, et une unité de commande (18) agencée pour commander ledit moyen d'alimentation (17) de telle sorte que la somme des flux lumineux des première et seconde LEDs (6, 8) reste constante lorsque lesdites intensités de courants respectives varient.

3. Dispositif d'éclairage selon l'une des revendications 1 ou 2, dans lequel ledit premier faisceau de lumière (7) émis par ladite première LED (6) est sensiblement perpendiculaire audit second faisceau de lumière (9) émis par ladite seconde LED (8).

4. Dispositif d'éclairage selon l'une des revendications 1 à 3, dans lequel lesdites première et seconde LEDs (6, 8) sont disposées à des distances respectives dudit diviseur de faisceau (10) sensiblement égales.

5. Dispositif d'éclairage selon l'une des revendications 1 à 4, dans lequel ledit diviseur de faisceau (10) est un miroir semi-réfléchissant.

6. Dispositif d'éclairage selon la revendication 5, dans lequel ledit miroir semi-réfléchissant est incliné d'un angle sensiblement égal à 45° par rapport aux dits premier et second faisceaux de lumière blanche (7, 9).

7. Dispositif d'éclairage selon l'une des revendications 1 à 6, dans lequel lesdites LEDs sont sensiblement identiques d'un point de vue géométrique.

8. Dispositif d'éclairage selon la revendication 1, dans lequel ledit premier élément optique (19) est un réflecteur elliptique et le ledit second élément optique (21) est une lentille.

9. Dispositif d'éclairage selon la revendication 8, dans lequel ledit réflecteur elliptique est agencé de telle sorte que ladite première LED (6) est positionnée audit foyer objet (Fo) dudit réflecteur elliptique et ladite zone (20) est positionnée audit foyer image (Fi) dudit réflecteur elliptique.

10. Dispositif d'éclairage selon la revendication 1, comprenant en outre un troisième élément optique (22) positionné entre chaque LED (6,8) et ledit diviseur de faisceau (10).

11. Dispositif d'éclairage selon la revendication 10, dans lequel ledit troisième élément optique (22) est une lentille agencée de telle sorte que l'image virtuelle de ladite LED (6) est positionnée au foyer objet (Fo) dudit réflecteur elliptique.

12. Dispositif d'éclairage selon l'une des revendications précédentes, dans lequel chaque LED (6, 6) a une température de couleur comprise entre 3000 degrés Kelvin et 5000 degrés Kelvin.

13. Appareil d'éclairage médical, notamment d'un champ opératoire (2), comprenant au moins un dispositif d'éclairage (5) selon l'une des revendications précédentes.

14. Appareil selon la revendication 13, du type à coupole d'éclairage dans laquelle plusieurs dispositifs d'éclairage (5) sont disposés autour de l'axe (A) de la coupole.

## Patentansprüche

1. LED-Beleuchtungsvorrichtung (5) eines Operationsfelds, die eine erste LED (6) umfasst, die eingerichtet ist, um einen ersten Weißlichtstrahl (7) abzugeben, der eine erste Farbtemperatur hat, und eine zweite LED (8), die eingerichtet ist, um einen zweiten Weißlichtstrahl (9) abzugeben, der eine zweite Farbtemperatur hat, die von der ersten Farbtemperatur unterschiedlich ist, **dadurch gekennzeichnet, dass** sie außerdem einen Strahlteiler (10) umfasst, um den ersten Lichtstrahl (7) in einen ersten Teil des ersten Strahls (11) zu teilen, der von dem Strahlteiler (10) reflektiert wird, und in einen zweiten Teil des ersten Strahls (12), der von dem Strahlteiler (10) übertragen wird, und um den zweiten Lichtstrahl (9) in einen ersten Teil des zweiten Strahls (13) zu teilen, der von dem Strahlteiler (10) reflektiert wird, und in einen zweiten Teil des zweiten Strahls (14), der von dem Strahlteiler (10) übertragen wird, und dass die erste LED (6), die zweite LED (8) und der Lichtstrahler (10) räumlich zueinander derart eingerichtet sind, dass der zweite Teil des ersten Strahls (12), der übertragen wird, und der erste Teil des zweiten Strahls (13), der reflektiert wird, einander überlagern, um einen ersten resultierenden Lichtstrahl (15) zu bilden, der eine Zwischenfarbtemperatur hat, die zwischen der ersten Farbtemperatur und der zweiten Farbtemperatur liegt, und dass der erste Teil des ersten Strahls (11), der reflektiert wird, und der zweite Teil des zweiten Strahls (14), der übertragen wird, einander überlagern, um einen zweiten resultierenden Strahl (16) zu bilden, der die Zwischenfarbtemperatur hat, und dass sie außerdem ein erstes Optikelement (19) umfasst, das eingerichtet ist, um den ersten resultierenden Strahl (15) zu einer Zone (20) des Beleuchtungsfelds zu fokussieren, und ein zweites Optikelement (21), das eingerichtet ist, um den zweiten resultierenden Strahl (16) zu der Zone (20) zu fokussieren.

2. Beleuchtungsvorrichtung nach Anspruch 1, die außerdem ein Stromversorgungsmittel (17) umfasst, das angepasst ist, um die erste und zweite LED (6, 8) mit jeweiligen variablen Stromstärken zu versorgen, und eine Steuereinheit (18), die eingerichtet ist, um das Versorgungsmittel (17) derart zu steuern, dass die Summe der Lichtflüsse der ersten und zweiten LED (6, 8) konstant bleibt, wenn die jeweiligen Stromstärken variieren.

3. Beleuchtungsvorrichtung nach einem der Ansprüche 1 oder 2, wobei der erste Lichtstrahl (7), der von der ersten LED (6) abgegeben wird, im Wesentlichen zu dem zweiten Lichtstrahl (9), der von der zweiten LED (8) abgegeben wird, senkrecht ist.

4. Beleuchtungsvorrichtung nach einem der Ansprüche 1 bis 3, wobei die erste und die zweite LED (6, 8) in jeweiligen Entfernungen von dem Strahlteiler (10), die im Wesentlichen gleich sind, angeordnet sind.

5. Beleuchtungsvorrichtung nach einem der Ansprüche 1 bis 4, wobei der Strahlteiler (10) ein halb reflektierender Spiegel ist.

6. Beleuchtungsvorrichtung nach Anspruch 5, wobei der halb reflektierende Spiegel mit einem Winkel im Wesentlichen gleich 45° in Bezug zu dem ersten und dem zweiten Weißlichtstrahl (7, 9) geneigt ist.

7. Beleuchtungsvorrichtung nach einem der Ansprüche 1 bis 6, wobei die LEDs im Wesentlichen hinsichtlich ihrer Geometrie identisch sind.

8. Beleuchtungsvorrichtung nach Anspruch 1, wobei das erste Optikelement (19) ein elliptischer Reflektor ist, und das zweite Optikelement (21) eine Linse ist.

9. Beleuchtungsvorrichtung nach Anspruch 8, wobei der elliptische Reflektor derart eingerichtet ist, dass die erste LED (6) im Objektbrennpunkt (Fo) des elliptischen Reflektors positioniert ist, und die Zone (20) im Bildbrennpunkt (Fi) des elliptischen Reflektors positioniert ist.

10. Beleuchtungsvorrichtung nach Anspruch 1, die außerdem ein drittes Optikelement (22) umfasst, das zwischen jeder LED (6, 8) und dem Strahlteiler (10) positioniert ist.

11. Beleuchtungsvorrichtung nach Anspruch 10, wobei das dritte Optikelement (22) eine Linse ist, die derart eingerichtet ist, dass das virtuelle Bild der LED (6) im Objektbrennpunkt (Fo) des elliptischen Reflektors positioniert ist.

12. Beleuchtungsvorrichtung nach einem der vorhergehenden Ansprüche, wobei jede LED (6, 8) eine Farbtemperatur hat, die zwischen 3000 Grad Kelvin und 5000 Grad Kelvin liegt.

13. Medizinisches Beleuchtungsgerät, insbesondere ein Operationsfeld (2), das mindestens eine Beleuchtungsvorrichtung (5) nach einem der vorhergehenden Ansprüche umfasst.

14. Gerät nach Anspruch 13 des Typs mit Beleuchtungskuppel, in der mehrere Beleuchtungsvorrichtungen (5) um die Achse (A) der Kuppel angeordnet sind.

## Claims

1. An operative field lighting device (5) having LEDs, said lighting device comprising a first LED (6) arranged to emit a first white-light beam (7) having a first color temperature, and a second LED (8) arranged to emit a second white-light beam (9) having a second color temperature that is different from said first color temperature, said lighting device being **characterized in that** it further comprises a beam splitter (10) for splitting said first light beam (7) into a first first beam portion (11) that is reflected by the beam splitter (10) and into a second first beam portion (12) that is transmitted by the beam splitter (10), and for splitting said second light beam (9) into a first second beam portion (13) that is reflected by the beam splitter (10) and into a second second beam portion (14) that is transmitted by the beam splitter (10), **in that** said first LED (6), said second LED (8), and said beam splitter (10) are arranged three-dimensionally relative to one another in such a manner that said second first beam portion (12) that is transmitted and said first second beam portion (13) that is reflected are superposed to form a first resulting beam (15) having an intermediate color temperature lying between the first color temperature and the second color temperature, and in such a manner that said first first beam portion (11) that is reflected and said second second beam portion (14) that is transmitted are superposed to form a second resulting beam (16) having said intermediate color temperature, and **in that** said lighting device further comprises a first optical element (19) arranged to focus said first resulting beam (15) towards a zone (20) of the field of illumination and a second optical element (21) that is arranged to focus said second resulting beam (16) towards said zone (20).

2. A lighting device according to claim 1, further comprising power supply means (17) for feeding electric current, which means are adapted to feed respective variable currents to said first and second LEDs (6, 8), and a control unit (18) arranged to control said power supply means (17) in such a manner that the sum of the light fluxes of the of the first and second LEDs (6, 8) remains constant when the magnitudes of said respective currents vary.

3. A lighting device according to claim 1 or claim 2, in which said first light beam (7) emitted by said first LED (6) is substantially perpendicular to said second light beam (9) emitted by said second LED (8).

4. A lighting device according to any one of claims 1 to 3, in which said first and second LEDs (6, 8) are disposed at respective distances from said beam splitter (10) that are substantially equal.

5. A lighting device according to any one of claims 1 to 4, in which said beam splitter (10) is a semi-reflective mirror.

6. A lighting device according to claim 5, in which said semi-reflective mirror is inclined at an angle substantially equal to 45° relative to said first and second white-light beams (7, 9).

7. A lighting device according to any one of claims 1 to 6, in which said LEDs are substantially identical from a geometrical point of view.

8. A lighting device according to claim 1, in which said first optical element (19) is an elliptical reflector and said second optical element (21) is a lens.

9. A lighting device according to claim 8, in which said elliptical reflector is arranged in such manner than said first LED (6) is positioned at said object focal point (Fₒ) of said elliptical reflector, and said zone (20) is positioned at said image focal point (Fᵢ) of said elliptical reflector.

10. A lighting device according to claim 1, further comprising a third optical element (22) positioned between each LED (6, 8) and said beam splitter (10).

11. A lighting device according to claim 10, in which said third optical element (22) is a lens arranged such that the virtual image of said LED (6) is positioned at the object focal point (Fₒ) of said elliptical reflector.

12. A lighting device according to any preceding claim, in which each LED (6, 8) has a color temperature lying in the range 3000 K to 5000 K.

13. A medical lighting fixture, in particular for illuminating an operative field (2), said medical lighting fixture including at least one lighting device (5) according to any preceding claim.

14. A fixture according to claim 13, of the type having a lighting dome in which a plurality of lighting devices (5) are disposed about the axis (A) of the dome.
